# EUROPEAN PATENT APPLICATION

(11) **EP 4 537 935 A1**
(43) Date of publication of application: **16.04.2025**
(21) Application number: 24205639.8
(22) Date of filing: 09.10.2024
(51) Int. Cl.: B01J 37/34, H01M 8/0612, C23C 14/04

(54) **METHOD OF COATING A CATALYST ON FLAT OR TEXTURED SUBSTRATES**

(30) Priority: 10.10.2023 US 202363589028 P
(71) Applicant: Johnson Matthey Public Limited Company, London EC2V 7AD (GB)
(72) Inventor: EDGAR, Jonathan Andrew, Billingham, TS23 1LB (GB); PRICE, Emily Rose, Reading, RG4 9NH (GB); CAUFFMAN, Scott Daniel, Wayne, 19087 (US); DALTON, James Spencer, Royston, SG8 5HE (GB); NISBET, Jordan, Royston, SG8 5HE (GB); DONG, Heather, Wayne, 19087 (US); THEOBALD, Mark Brian Michael, Royston, SG8 5HE (GB); HARDSTONE, Katharine Ann, Reading, RG4 9NH (GB)
(74) Representative: Johnson Matthey Plc

(57) **Abstract**

According to the invention there is a method of applying a catalyst layer to a surface, the method comprising the steps of: providing a donor substrate having opposing first and second surfaces and providing a catalyst ink disposed as a layer on the second surface, wherein the catalyst ink comprises a catalyst and a solvent; providing an acceptor substrate, wherein the second surface of the donor substrate faces towards the acceptor substrate; and irradiating the catalyst ink with laser radiation at a wavelength which is absorbed by the catalyst ink so as to transfer the catalyst ink from the donor substrate to the acceptor substrate.

## Description

### Field of the Invention

The invention relates to a method of preparing a catalyst layer on a flat and/or textured surface such as a reformer catalyst plate for a solid oxide fuel cell (SOFC). The reformer catalyst interconnect plate converts methane, natural gas, or biofuel into hydrogen gas, and the hydrogen gas is then used to create power within the SOFC. The invention also relates to a method of manufacturing a catalyst-coated flat and/or textured surface, and associated catalyst layers and catalyst-coated substrates such as interconnect plates manufactured using such methods.

### Background of the Invention

Catalyst coated substrates such as metal plates may be employed within various applications, including fuel cells and electrolysers. Traditional methods of catalyst coating include spray coating and ultrasonic spray coating. However, such methods have limited ability to control coating location and layer thickness, coat catalysts in unique patterns, coat flat or textured surfaces, and they may also result in catalyst waste through overspray. With expanded applications for use of catalyst coated plates, it is desired to correct these insufficiencies of the traditional coating methods. Methods and associated products of the present invention address these needs by providing more precise control of coating location, coating layer thickness, coating in predetermined patterns, coating with enhanced resolution, coating flat or textured surfaces, and reducing catalyst waste.

### Summary of the Invention

According to some aspects of the present invention, a method of applying a catalyst layer to a surface, comprises the steps of: providing a donor substrate having opposing first and second surfaces and providing a catalyst ink disposed as a layer on the second surface, wherein the catalyst ink comprises a catalyst and a solvent; providing an acceptor substrate, wherein the second surface of the donor substrate faces towards the acceptor substrate; and irradiating the catalyst ink with laser radiation at a wavelength which is absorbed by the catalyst ink so as to transfer the catalyst ink from the donor substrate to the acceptor substrate. The method may further comprise the step of drying the catalyst ink on the acceptor substrate so as to remove substantially all the solvent. In some aspects, the catalyst comprises a reformer catalyst.

In certain aspects, the acceptor substrate comprises a non-flat surface, a textured surface, a surface with raised and depressed sections, a surface with dimples, and/or a surface with ridges. In certain aspects, the acceptor substrate comprises a flat surface.

In some aspects, the acceptor substrate comprises a plate for a solid oxide fuel cell.

In certain aspects, the catalyst ink is applied to the textured surface in a uniform coating layer thickness. In some aspects, the catalyst ink is applied to the textured surface in a pre-determined non-uniform coating layer thickness. The catalyst ink may be applied to the acceptor substrate in a pre-determined pattern and in some aspects may be applied in a pre-determined pattern corresponding to a texture of the acceptor substrate surface. In some aspects, the catalyst layer comprises at least one region having a first thickness and at least one region having a second thickness, wherein the first and second thicknesses are different.

In certain aspects, the acceptor substrate has a textured surface comprising depressed and raised surfaces, wherein the catalyst ink is applied to the acceptor substrate in a pre-determined pattern corresponding to a texture of the acceptor substrate surface, such that the depressed surfaces are coated and the raised surfaces are not coated. In some aspects, the acceptor substrate has a textured surface comprising depressed and raised surfaces, wherein the catalyst ink is applied to the acceptor substrate in a pre-determined pattern corresponding to a texture of the acceptor substrate surface, such that the raised surfaces are coated and the depressed surfaces are not coated.

The solvent may have a boiling point of at least 80°C, of at least 95°C, at least 100°C, at least 110°C. The solvent may comprise, for example, water, ethanol, n-propanol, iso-propanol, n-butanol, methanol, ethylene glycol, propylene glycol, dipropylene glycol, poly(ethylene glycol), polypropylene glycol), ethylene carbonate, propylene carbonate, diethyl carbonate, dimethyl carbonate, or a combination thereof. In some aspects, the solvent consists essentially of water. 19. A method according to any of the preceding claims, wherein the catalyst ink comprises the catalyst in an amount of at least 5 wt%, at least 10 wt%, at least 15 wt%, at least 20 wt%, at least 25 wt%, at least 30 wt%, at least 40 wt%, or at least 50 wt% based on the total weight of the catalyst ink.

In some aspects, the catalyst layer has a substantially uniform catalyst loading. In other aspects, the catalyst layer may have a substantially non-uniform catalyst loading.

According to some aspects of the present invention, a catalyst layer may be obtained using a method as described herein. According to some aspects of the present invention, a catalyst-coated plate may be obtained using a method as described herein.

### Brief Description of the Drawings

Figure 1 is an image showing a flat metal surface with a catalyst layer applied using the ("laser induced forward transfer") LIFT digital printing system.
Figure 2 is an image showing a dimpled aluminium surface with four catalyst layers applied using the LIFT system.
Figure 3 is an image showing a dimpled aluminium surface with four catalyst layers applied using the LIFT system.
Figure 4 is an image showing a paper surface with a catalyst layer applied using the LIFT system.
Figure 5 is an image showing a metal surface with a catalyst layer applied using the LIFT system.
Figure 6 is an image showing a metal surface with four catalyst layers applied using the LIFT system.
Figure 7 shows four patterns to be applied as catalyst layers.
Figure 8 is an image showing a metal surface with four catalyst layers applied using the LIFT system.

### Detailed Description of the Invention

Preferred and/or optional features of the invention will now be set out. Any aspect of the invention may be combined with any other aspect of the invention, unless the context demands otherwise. Any of the preferred or optional features of any aspect may be combined, singly or in combination, with any aspect of the invention, unless the context demands otherwise.

Methods of the invention relate to applying a catalyst layer to a surface. In some aspects,
the invention provides methods of preparing a catalyst layer for an electrochemical device, such as a fuel cell or an electrolyser. In some aspects, the invention relates to preparing a catalyst layer for an internal reformer interconnect plate within an solid oxide fuel cell ("SOFC"). The catalyst may be coated onto a substrate, such as an interconnect plate, by digital methods as described herein, where the catalyst ink can be applied in predetermined patterns and the thickness of the layer(s) can be controlled more easily than in traditional catalyst application methods. In some aspects, methods of the present invention relate to coating a reformer catalyst onto an interconnect plate to be used within a SOFC stack. Such catalyst may convert methane or natural gas to hydrogen (and CO₂) so that the SOFC plate within the stack can generate electricity. In other aspects, the method can be used to prepare an anode catalyst layer and/or a cathode catalyst layer, as desired. The method includes using a laser-induced forward transfer (LIFT) process. Methods of the present invention can be performed using an apparatus as described in WO2019/145300, for example.

The method comprises the step of providing a donor substrate having opposing first and second surfaces. The donor substrate is preferably transparent to the laser radiation. That is, the donor substrate absorbs the laser radiation to a substantially negligible degree. The donor substrate is an ink carrier, for example a circulating ribbon. A layer of catalyst ink is provided as a layer on the donor substrate. The catalyst ink can be applied to the donor substrate using an inking unit. Preferably, the catalyst ink is applied as a layer so as to uniformly coat the donor substrate substantially across its second surface. The layer of catalyst ink on the second surface can have a thickness of 100 µm or less, preferably 75 µm or less, preferably 50 µm or less, more preferably 30 µm or less and most preferably 25 µm or less. The layer of catalyst ink disposed on the second surface of the donor substrate can have a thickness of 10 µm or more, 15 µm or more, and 20 µm or more. The thickness of the layer of catalyst ink disposed on the second surface of the donor substrate can be in a range comprising any combination of the aforementioned ranges, e.g. in a range of about 10 µm to 100 µm, preferably about 15 µm to 75 µm, and preferably about 20 µm to 50 µm.

The method further comprises the step of providing an acceptor substrate, wherein the second surface of the donor substrate faces towards the acceptor substrate. The second surface of the donor substrate and the acceptor substrate are typically separated by a gap. The gap can be a distance of about 2 mm or less, 500 µm or less, 300 µm or less, or 200 µm or less. In some aspects, the gap can be a distance of about 200 µm to 400 µm. When the acceptor substrate comprises an uneven surface, the gap refers to the distance between the surface of the donor substrate and the nearest surface or portion thereof of the acceptor substrate. In some aspects, the acceptor substate comprises a metal sheet, such as aluminum or stainless steel. The acceptor substrate may comprise, for example, an interconnect plate, such as for a SOFC.

The method further comprises the step of irradiating the catalyst ink (on the donor substrate) with laser radiation so as to transfer the catalyst ink from the donor substrate to the acceptor substrate. Preferably, the catalyst ink is irradiated with pulses of laser radiation. The laser radiation can be directed through the first surface of the donor substrate so as to impinge on the catalyst ink, preferably at or near the interface between the catalyst ink and the second surface of the donor substrate. The catalyst ink absorbs the laser radiation. In some aspects, catalyst ink may include adsorption promotors such as susceptor particles or effect pigments to promote efficient adsorption of the laser radiation. The susceptor particles can be metal, metal oxide, carbon, or other suitable particles of a suitable size, preferably up to 1µm in diameter, more preferably up to 5µm in diameter. The susceptor particles may be selected so as not to impede the function of the catalyst particles, and more preferably to promote the catalytic function i.e. as a support material for the catalytic particles. WO2019/145300 describes the use of effect pigments and is incorporated herein by reference.

The laser may be controlled at an appropriate power for the catalyst ink, for example about 100W to about 500W. The laser radiation heats the catalyst ink in a targeted localised region so as to vaporise a portion of the catalyst ink in the targeted localised region. Such a process can induce an ejection of a droplet of the catalyst ink from the donor substrate to the acceptor substrate. That is, a liquid droplet of catalyst ink is transferred from the second surface of the donor substrate to the acceptor substrate in a precise manner. In some aspects, if the gap between the donor substrate and the acceptor substrate is sufficiently narrow then the catalyst ink may be in contact with both substrates at the same time, with the adhesive/wetting force of the liquid droplet on the acceptor substrate and the relative motion of the donor substrate and the acceptor substrate resulting in breakup of the catalyst ink ligament.

The length of the acceptor substrate may be conveyed beneath the laser to deposit the catalyst layer on the desired area of the acceptor substrate. The catalyst layer will be deposited on the acceptor substrate based on where the laser is programmed to fire as the acceptor substrate passes beneath. Laser power and acceptor substrate speed can each be used to control the transfer of catalyst ink to the acceptor substrate. An increase in laser power will increase the catalyst deposition per layer while a decrease in laser power will decrease the catalyst deposition per layer. A decrease in conveyor / acceptor substrate speed will increase the catalyst deposition per layer while an increase in conveyor / acceptor substrate speed will decrease the catalyst deposition per layer. This ability to modify the area, design, and thickness of the catalyst layer at will without the need for new tooling provides a significant benefit.

Additionally, the ability of the catalyst ink to adsorb the laser radiation can also affect transfer of catalyst ink. Therefore, controlling the concentration of adsorption promotors may be effective at defining the amount of catalyst ink deposited; a higher concentration of adsorption promotors in the catalyst ink may increase catalyst deposition while a lower concentration of adsorption promotors in the catalyst ink may decrease catalyst deposition. For example, with the laser power and acceptor substrate speed held constant, a variable concentration of the adsorption promotors in the catalyst ink would result in a different amount of catalyst deposition on the acceptor substrate.

The method can further comprise the step of drying the catalyst ink on the acceptor substrate so as to remove substantially all of the solvent. Such a drying step can include heating the acceptor substrate to a temperature suitable to dry the catalyst ink. A suitable temperature may be determined by a number of factors including the catalyst ink composition, the volume of catalyst ink deposited, and how efficiently the acceptor substrate is heated. In some aspects, a drying step can include heating the acceptor substrate to a temperature of at least 40°C, at least 50°C, at least 60°C, at least 70°C, at least 80°C, at least 90°C, or at least 100°C.

The process (optionally including the drying step) can be repeated as required to prepare a catalyst layer having a desired thickness and/or desired catalyst loading. The catalyst layer can have a substantially uniform thickness. The catalyst layer can have a (dried) thickness of at least 1 µm, at least 2 µm, or at least 3 µm. The catalyst layer can have a (dried) thickness of 70 µm or less, 60 µm or less, 50 µm or less, 30 µm or less, 20 µm or less, or 15 µm or less. The catalyst layer can have a (dried) thickness in a range comprising any combination of the aforementioned lower and upper limits. In some embodiments, the catalyst layer can have a substantially non-uniform thickness or can be deposited in a pre-determined pattern. In such cases, the catalyst layer can comprise at least one first region having a first thickness and at least one second region having a second thickness, wherein the first and second thicknesses are different. In some embodiments, the catalyst layer can comprise at least one region having a first thickness and at least one region with no thickness (i.e. regions where the catalyst ink was not transferred). In some aspects, a minimum layer thickness is limited by the particle size distribution of the catalyst ink; i.e., the thickness of the catalyst layer will not be less than the largest particle size ink the catalyst ink. The first thickness can be at least 1 µm, at least 2 µm, or at least 3 µm. The first thickness can be 50 µm or less, 30 µm or less, 20 µm or less, or 15 µm or less. The second thickness can be ≥0 µm, at least 1 µm, at least 2 µm, or at least 3 µm. The second thickness can be less than 50 µm or less, 30 µm or less, 20 µm or less, 15 µm or less, or 5 µm or less. The first and second thicknesses can each be in a range comprising any combination of the aforementioned lower and upper limits.

Suitable acceptor substrates may be selected for the desired context. In some aspects, an acceptor substrate comprises a plate such as a metal plate such as an interconnect plate for use in a SOFC. In some aspects, the plate may be coated as a reformer catalyst in a SOFC.

In some aspects, the catalyst layer can be deposited in a pre-determined pattern on an acceptor substrate having a flat surface. In some aspects, the catalyst layer can be deposited in a pre-determined pattern on an acceptor substrate having a non-flat surface. A non-flat acceptor substrate surface may comprise a surface having a texture, such as having a surface with raised and/or depressed sections. For clarity, the terms raised and depressed are being used to describe the position of the surface sections relative to each other. Examples of a non-flat acceptor substrate surface may include a ridged or dimpled surface. Suitable non-flat acceptor substrates may include raised and depressed sections which form a repeating pattern. Suitable non-flat acceptor substrates may also include raised and depressed sections which do not form a repeating pattern.

In some aspects, the catalyst layer can be deposited in a pre-determined pattern corresponding to a texture of the acceptor substrate surface. For example, the catalyst layer may be deposited such that the catalyst layer is deposited on the depressed sections of the acceptor substrate surface and not deposited on the raised sections of the acceptor substrate surface. In some aspects, the catalyst layer may be deposited such that the catalyst layer is deposited on the raised sections of the acceptor substrate surface and not deposited on the depressed sections of the acceptor substrate surface. In another example, the catalyst layer may be deposited such that the catalyst layer is deposited in one amount on the raised sections of the acceptor substrate surface and in a different amount on the depressed sections of the acceptor substrate surface. In another example, the catalyst layer may be deposited such that one type of catalyst is deposited on the raised sections of the acceptor substrate surface and a different catalyst is deposited on the depressed sections of the acceptor substrate surface in a separate process.

The process (optionally including the drying step) can be repeated as required to prepare a catalyst layer having a desired catalyst loading. The plate may optionally be calcined between to decompose any ligands, salts or organics present in the catalyst coating. Suitable calcination temperatures may be about 350°C to about 750°C, or about 450°C to about 650°C.

The catalyst layer can have a substantially uniform catalyst loading. The catalyst layer can have a catalyst loading in the range of 0.0001 g/cm² to 0.1 g/cm², or 0.001 g/cm² to 0.01 g/cm². In some embodiments, the catalyst layer can have a substantially non-uniform catalyst layer loading (e.g. as a gradient in the catalyst layer) or be deposited in a pre-determined pattern (e.g. continuous track having a serpentine path). In such cases, the catalyst layer can comprise at least one first region having a first catalyst layer loading and at least one second region having a second catalyst layer loading, wherein the first and second catalyst layer loadings are different. In some embodiments, the catalyst layer can comprise at least one region having a first catalyst layer loading and at least one region with a catalyst layer loading of zero (i.e. regions where the catalyst ink was not transferred). The first catalyst layer loading can be in a range of 0.001 g/cm² to 0.1 g/cm². The second thickness can be in a range of ≥0 g/cm² to <0.1 g/cm².

Suitable catalyst inks for the process of the invention include any catalyst ink containing the desired catalyst properties. In one aspect, suitable catalyst inks comprise reformer catalysts for SOFC. In another aspect, suitable catalyst inks are those used in the manufacture of catalyst layers for electrochemical devices, such as anodes, cathodes, and electrolytes in fuel cells and electrolysers.

The catalyst used will depend on the reaction it is intended to catalyse, and its selection is within the capability of the skilled person. The catalyst may be a reformer catalyst, such as a reformer catalyst for use in a SOFC. The catalyst can comprise catalytic particles (e.g. metal-containing particles, such as a first metal, an alloy of a first metal or an oxide thereof), which are preferably dispersed or otherwise supported on a particulate support material. The particulate support material may comprise a metal oxide, such as alumina, silica, silica-alumina, ceria, or combinations thereof.

The catalytic particles are suitably selected from:
(i) the platinum group metals (platinum, palladium, rhodium, ruthenium, iridium and osmium);
(ii) gold or silver;
(iii) a base metal;
(iv) rare earth metals and/or rare earth metal oxides; or
(v) an alloy or mixture comprising one or more of these metals or their oxides.

A base metal is a transition metal which is not a noble metal. A noble metal is a platinum group metal (platinum, palladium, rhodium, ruthenium, iridium or osmium) or gold. Preferred base metals are copper, cobalt, nickel, zinc, iron, titanium, molybdenum, vanadium, manganese, niobium, tantalum, chromium and tin. Rare earth metal is scandium, yttrium, and the lanthanides such as but not limited to lanthanum and cerium.

Reformer catalysts are known in the art, e.g. WO 2004/047985 and GB2424196, each of which are incorporated by reference herein. In some aspects, a suitable reformer catalyst may include a platinum group metal or an alloy of a platinum group metal, preferably with one or more rare earth metal. The metal(s) are preferably dispersed or otherwise supported on a particulate support material comprising a metal oxide, such as alumina. A catalyst ink comprising a reformer catalyst may include other components which may be necessary in order for the catalyst ink to be used in the LIFT system, such as cellulose polymer and a carbon particle slurry in water. Cellulose polymer may be included as a film strengthener and/or as a rheology modifier. Carbon may be included as a laser adsorption promotor or contrast agent. Such additives may be further described in US 2020/0369064 which is incorporated by reference herein.

Where the catalyst comprises catalytic particles supported on a support, the catalytic particles (i.e. metal-containing particles) can have a D₅₀ particle size of no more than 50 nm, no more than 30 nm, no more than 20 nm, preferably no more than 10 nm, and more preferably no more than 5 nm. For example, the particles can have a D₅₀ particle size of at least 1 nm. D₅₀ particle size is measured by examination in a transmission electron microscope (TEM). The D₅₀ particle size can be in a range comprising any combination of the aforementioned upper and lower limits.

The catalyst (i.e. catalytic particles and, where present, the support) in the catalyst ink can have a D₅₀ particle size (or aggregate size, as appropriate) of at least 0.1 µm, at least 0.3 µm, at least 0.5 µm, at least 0.75 µm, at least 1 µm, at least 3 µm, or at least 5 µm. The catalyst in the catalyst ink can have a D₅₀ particle size (or aggregate size, as appropriate) of no more than 30 µm, no more than 20 µm, no more than 15 µm, no more than 12 µm, orno more than 8 µm. The catalyst can have a D₅₀ particle size (or aggregate size, as appropriate) in the range of and including 0.1 µm to 20 µm, 2 µm to 15 µm, 5 µm to 12 µm, and 3 µm to 8 µm. For example, a supported catalyst can have a D₅₀ particle size of about 1 µm. D₅₀ particle size is measured by dynamic light scattering using a Malvern Mastersizer^{™}.

The catalyst ink can comprise the catalyst in an amount of at least 5 wt%, at least 10 wt%, at least 15 wt%, at least 20 wt%, at least 25 wt%, at least 30 wt%, at least 40 wt%, or at least 50 wt% based on the total weight of the catalyst ink. The catalyst ink can comprise a total solids content (including a metal oxide support, noble metal, any base, transition, or rare earth metals, and/or any other optional solid additives) () of at least 5 wt.%, at least 10 wt.%, at least 15 wt.%, at least 16 wt.%, at least 17 wt.%, at least 20 wt.%, at least 25 wt.%, based on the total weight of the catalyst ink. The catalyst ink can have a total solids content of less than 50 wt.%, less than 40 wt.% or less than 30 wt.%, based on the total weight of the catalyst ink. The total solids content can be in a range comprising any combination of the aforementioned lower and upper limits, e.g. 5 wt.% to 50 wt.%. Methods of the present invention allow a wider range of inks to be used, including inks with a higher solids content, which would otherwise lead to defective layers using known techniques, such as slot die coating.

The solvent can have a boiling point of at least 80°C, at least 95°C, at least 100°C, and at least 110°C. The solvent can comprise water, an organic solvent or a mixture of water and an organic solvent. The organic solvent is preferably miscible with water. The organic solvent is preferably a protic polar solvent, such as an alcoholic solvent. The organic solvent can be methanol, ethanol, 1-propanol, or iso-propanol, n-butanol, ethylene glycol, propylene glycol, dipropylene glycol, poly(ethylene glycol), polypropylene glycol), ethylene carbonate, propylene carbonate, dimethyl carbonate, diethyl carbonate, or any combination thereof. Preferably, the organic solvent is ethanol, n-propanol, iso-propanol, ethylene glycol, propylene glycol, ethylene carbonate, propylene carbonate, or any combination thereof. Preferably, the solvent comprises water at least 50 wt.% water, preferably ≥60 wt.% water, more preferably ≥70 wt.% water, more preferably ≥80 wt.% water, ≥90 wt.% water, and more preferably 95 wt.% water, based on the total weight of the solvent. More preferably, the solvent consists essentially of or consists only of water. Using a solvent without volatile organic components can reduce the flammability of the ink resulting in a safer process with less chemical waste. When depositing catalyst inks onto highly hydrophobic substrates, organic solvents are typically added to inks to help prevent dewetting. Methods of the present invention are unexpectedly suitable for printing catalyst inks with a solvent consisting essentially of (or consisting entirely of) water onto a variety of different acceptor substrates including hydrophobic substrates, whilst maintaining good catalyst layer properties and structure.

The catalyst inks of the present invention can have a far wider range of acceptable rheological properties compared to catalyst inks suitable for known coating techniques in the field, such as slot die, spray coating, screen printing, inkjet printing and gravure. For example, catalyst inks of the present invention can have a viscosity in a range of at least about 10 cP to about 1,000 cP or less, when measured at 25 °C and a shear rate of 100 s⁻¹. Furthermore, methods of the present invention do not require passing the ink through a print head or nozzle. Consequently, methods of the present invention are not subject to the problem of blockages in the print head or nozzle, which can result in machine down-time.

An example of typical apparatus settings suitable for methods of the invention are detailed in Table 1.

**Table 1**

| | |
|---|---|
| Ink ribbon | Continuous polymer ribbon |
| Laser | Solid-state laser, especially 800-1800 nm |
| Laser power | 1-500 kW/mm² |
| Writing focus | 20-100 µm |
| Thickness of catalyst ink layer on donor substrate | 10-100 µm, optionally 20-50 µm |
| Speed of donor substrate | 0.9-3.5 × Printing speed; optionally 2.5-3.5 × Printing speed |
| Distance of donor substrate to the acceptor substrate | Approx. 0.1-2 mm, optionally approx. 0.1-0.5 mm |
| Printing speed | 1-10 m/min |
| Printing width | 10 mm to 2000 mm |

### Examples

### Example 1

A catalyst ink was prepared and applied to a flat metal surface using the LIFT system as described herein. Catalyst ink properties and LIFT parameters may be adjusted to achieve the desired catalyst layer mass, resolution, and overall quality. A catalyst ink was prepared with:
- 80.4% reformer catalyst (35% solids in water)
- 6.7% ethylene glycol
- 12.7% water
- 0.2% carbon
- 0.1% high molecular weight cellulose

The ink was applied in a pre-determined pattern to the acceptor substrate with the following LIFT parameters:
- Laser Power = 140W
- Print distance = 0.2mm
- Donor layer thickness = 20µm
- Substrate speed = 8m/min
- Substrate = 0.1mm flat aluminium sheet

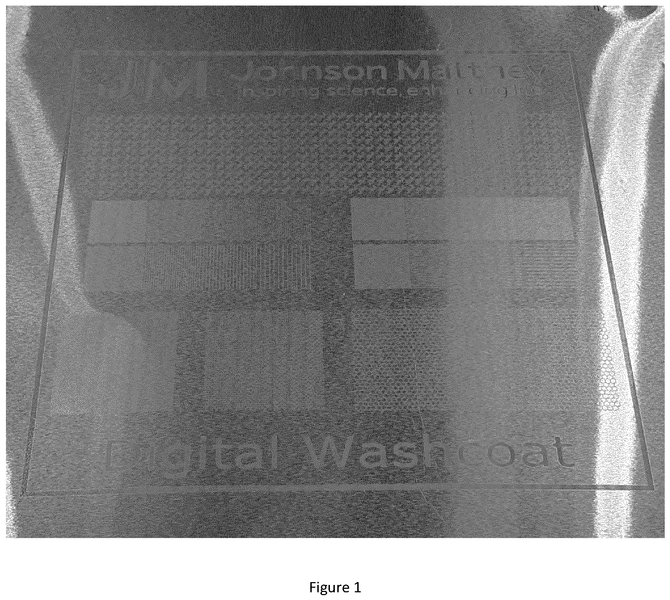

The catalyst ink was then dried on the substrate. Figure 1 shows the substrate with the applied catalyst layer.

### Example 2

Catalyst ink of the formulation from Example 1 was applied to a substrate with a textured surface, specifically a dimpled aluminium sheet, using the LIFT system as described herein. The ink was applied to the acceptor substrate with the following LIFT parameters:
- Laser Power = 140W
- Print distance = 1mm
- Donor layer thickness = 20µm
- Substrate speed = 8m/min
- Substrate = 0.1mm dimpled aluminium sheet

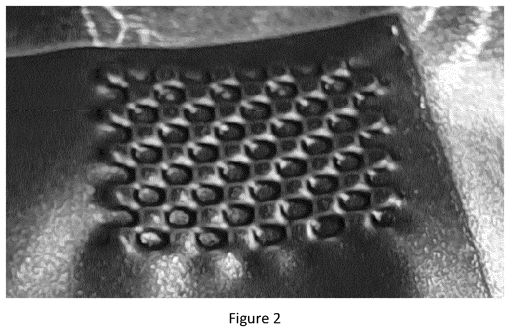

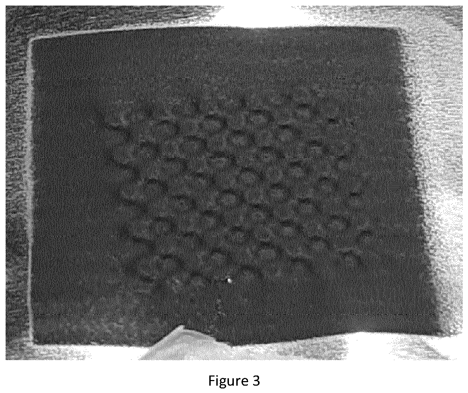

Four layers of catalyst ink were applied to the acceptor substrate. In a first test, the four layers were applied with no inter-layer drying. Figure 2 shows this product. In a second test, the four layers were applied with inter-layer drying with a handheld heat gun between each layer. Figure 3 shows this product.

### Example 3

Catalyst ink of the formulation from Example 1 was applied to a substrate comprising high quality printing paper using the LIFT system as described herein. The ink was applied in a pre-determined pattern to the acceptor substrate with the following LIFT parameters:
- Laser Power = 127W
- Print distance = 0.2mm
- Donor layer thickness = 20µm
- Substrate speed = 8m/min
- Substrate = Invercote (high quality printing paper)

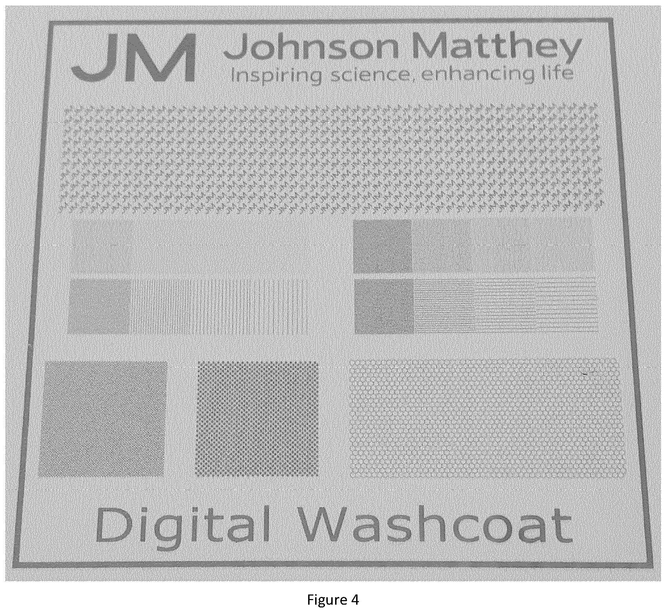

Figure 4 shows the substrate with the applied catalyst layer.

### Example 4

Catalyst ink of the formulation from Example 1 was applied to a substrate comprising an FeCr-alloy sheet using the LIFT system as described herein. The ink was applied to the acceptor substrate with the following LIFT parameters:
- Laser Power = 140W
- Print distance = 0.2mm
- Donor layer thickness = 20µm
- Substrate speed = 8m/min
- Substrate = 0.1mm FeCrAlloy sheet

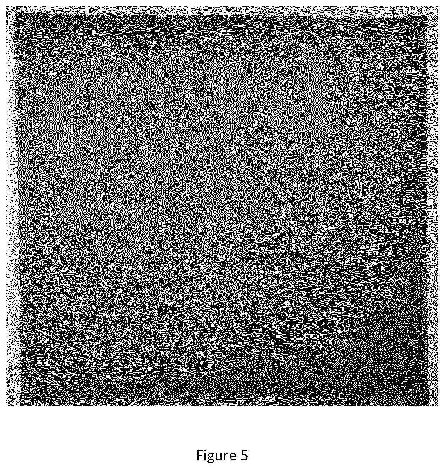

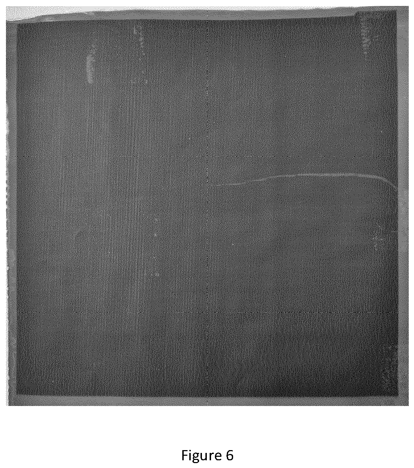

Using these parameters, a substrate was prepared with one uniform applied catalyst layer as shown in Figure 5. On another acceptor substrate, four uniform layers of catalyst were applied with interlayer drying by a handheld heat gun, as shown in Figure 6.

### Example 5

Catalyst ink was prepared with the following formulation:
- 80% alumina washcoat (28% solids in water)
- 19.7% water
- 0.2% carbon
- 0.1% cellulose ether

The catalyst ink was applied to a substrate comprising an FeCr-alloy sheet using the LIFT system as described herein. The ink was applied to the acceptor substrate with the following LIFT parameters:
- Laser Power = 180W
- Print distance = 0.2mm
- Donor layer thickness= 18µm
- Substrate speed = 8m/min
- Substrate = 0.1mm FeCrAlloy sheet

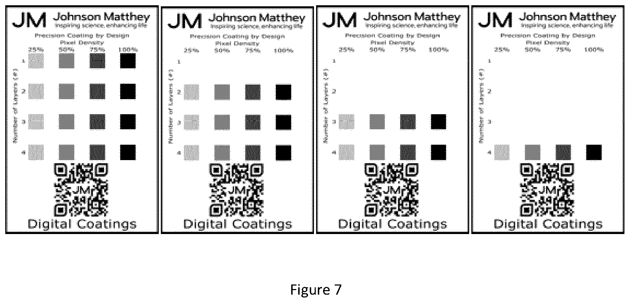

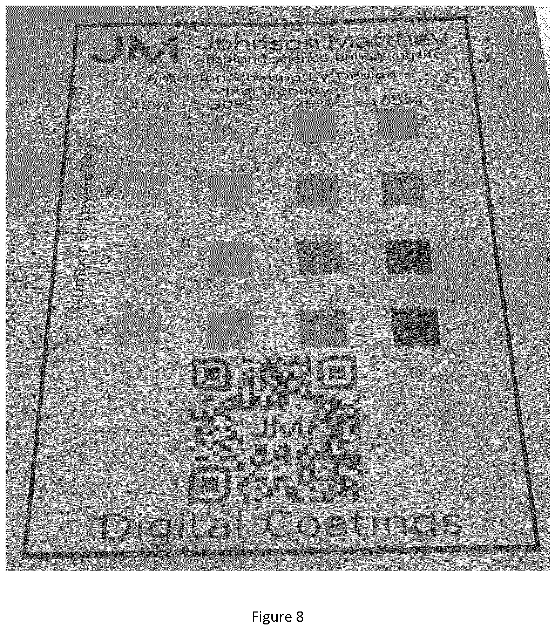

Four layers of catalyst ink were applied to the acceptor substrate; the pattern of each layer corresponds with the four images as shown in Figure 7 (one image = one layer) - the images were applied sequentially left to right, first to last. The subsequent layers overlaid the previous layers. The finished product is shown in Figure 8 and demonstrates the precision ink placement by pixel density of the image.

Further aspects and embodiments of the present disclosure are set out in the following clauses:
Clause 1. A method of applying a catalyst layer to a surface, the method comprising the steps of:
   providing a donor substrate having opposing first and second surfaces and providing a catalyst ink disposed as a layer on the second surface, wherein the catalyst ink comprises a catalyst and a solvent;
   providing an acceptor substrate, wherein the second surface of the donor substrate faces towards the acceptor substrate; and
   irradiating the catalyst ink with laser radiation at a wavelength which is absorbed by the catalyst ink so as to transfer the catalyst ink from the donor substrate to the acceptor substrate.
Clause 2. A method according to clause 1, wherein the method further comprises a step of drying the catalyst ink on the acceptor substrate so as to remove substantially all the solvent.
Clause 3. A method according to any of the preceding clauses, wherein the catalyst comprises a reformer catalyst.
Clause 4. A method according to any of the preceding clauses, wherein the acceptor substrate comprises a non-flat surface.
Clause 5. A method according to any of the preceding clauses, wherein the acceptor substrate comprises a textured surface.
Clause 6. A method according to any of the preceding clauses, wherein the acceptor substrate comprises a surface with raised and depressed sections.
Clause 7. A method according to any of the preceding clauses, wherein the acceptor substrate comprises a surface with dimples.
Clause 8. A method according to any of the preceding clauses, wherein the acceptor substrate comprises a surface with ridges.
Clause 9. A method according to any of the preceding clauses, wherein the acceptor substrate comprises a plate for a solid oxide fuel cell.
Clause 10. A method according to clause 5, wherein the catalyst ink is applied to the textured surface in a uniform coating layer thickness.
Clause 11. A method according to clause 5, wherein the catalyst ink is applied to the textured surface in a pre-determined non-uniform coating layer thickness.
Clause 12. A method according to any of the preceding clauses, wherein the catalyst ink is applied to the acceptor substrate in a pre-determined pattern.
Clause 13. A method according to any of the preceding clauses, wherein the catalyst ink is applied to the acceptor substrate in a pre-determined pattern corresponding to a texture of the acceptor substrate surface.
Clause 14. A method according to any of clauses 1-9 or 11-13, wherein the catalyst layer comprises at least one region having a first thickness and at least one region having a second thickness, wherein the first and second thicknesses are different.
Clause 15. A method according to any of the preceding clauses, wherein the acceptor substrate has a textured surface comprising depressed and raised surfaces, and wherein the catalyst ink is applied to the acceptor substrate in a pre-determined pattern corresponding to a texture of the acceptor substrate surface, such that the depressed surfaces are coated and the raised surfaces are not coated.
Clause 16. A method according to any of the preceding clauses, wherein the acceptor substrate has a textured surface comprising depressed and raised surfaces, and wherein the catalyst ink is applied to the acceptor substrate in a pre-determined pattern corresponding to a texture of the acceptor substrate surface, such that the raised surfaces are coated and the depressed surfaces are not coated.
Clause 17. A method according to any of clauses 1-3, 9, or 12, wherein the acceptor substrate comprises a flat surface.
Clause 18. A method according to any of the preceding clauses, wherein the solvent has a boiling point of at least 80°C, at least 95 °C, at least 100°C, or at least 110°C.
Clause 19. A method according to any of the preceding clauses, wherein the solvent comprises water, ethanol, n-propanol, iso-propanol, n-butanol, methanol, ethylene glycol, propylene glycol, dipropylene glycol, poly(ethylene glycol), polypropylene glycol), ethylene carbonate, propylene carbonate, diethyl carbonate, dimethyl carbonate, or a combination thereof.
Clause 20. A method according to clause 17, wherein the solvent consists essentially of water.
Clause 21. A method according to any of the preceding clauses, wherein the catalyst ink comprises the catalyst in an amount of at least 5 wt%, at least 10 wt%, at least 15 wt%, at least 20 wt%, at least 25 wt%, at least 30 wt%, at least 40 wt%, or at least 50 wt% based on the total weight of the catalyst ink.
Clause 22. A method according to any previous clause, wherein the catalyst layer has a substantially uniform catalyst loading.
Clause 23. A method according to any of clause 1 to 21, wherein the catalyst layer has a substantially non-uniform catalyst loading.
Clause 24. A catalyst layer obtained using a method according to any previous clause.
Clause 25. A catalyst-coated plate comprising the catalyst layer according to clause 24.

## Claims

1. A method of applying a catalyst layer to a surface, the method comprising the steps of:
providing a donor substrate having opposing first and second surfaces and providing a catalyst ink disposed as a layer on the second surface, wherein the catalyst ink comprises a catalyst and a solvent;
providing an acceptor substrate, wherein the second surface of the donor substrate faces towards the acceptor substrate; and
irradiating the catalyst ink with laser radiation at a wavelength which is absorbed by the catalyst ink so as to transfer the catalyst ink from the donor substrate to the acceptor substrate.

2. A method according to claim 1, wherein the method further comprises a step of drying the catalyst ink on the acceptor substrate so as to remove substantially all the solvent.

3. A method according to any of the preceding claims, wherein the catalyst comprises a reformer catalyst.

4. A method according to any of the preceding claims, wherein the acceptor substrate comprises a non-flat surface.

5. A method according to any of the preceding claims, wherein the acceptor substrate comprises a textured surface.

6. A method according to any of the preceding claims, wherein the acceptor substrate comprises a surface with raised and depressed sections.

7. A method according to any of the preceding claims, wherein the acceptor substrate comprises a surface with dimples.

8. A method according to any of the preceding claims, wherein the acceptor substrate comprises a surface with ridges.

9. A method according to any of the preceding claims, wherein the acceptor substrate comprises a plate for a solid oxide fuel cell.

10. A method according to any of the preceding claims, wherein the catalyst ink is applied to the acceptor substrate in a pre-determined pattern.

11. A method according to any of the preceding claims, wherein the catalyst ink is applied to the acceptor substrate in a pre-determined pattern corresponding to a texture of the acceptor substrate surface.

12. A method according to any of the preceding claims, wherein the acceptor substrate has a textured surface comprising depressed and raised surfaces, and wherein the catalyst ink is applied to the acceptor substrate in a pre-determined pattern corresponding to a texture of the acceptor substrate surface, such that the depressed surfaces are coated and the raised surfaces are not coated.

13. A method according to any of the preceding claims, wherein the acceptor substrate has a textured surface comprising depressed and raised surfaces, and wherein the catalyst ink is applied to the acceptor substrate in a pre-determined pattern corresponding to a texture of the acceptor substrate surface, such that the raised surfaces are coated and the depressed surfaces are not coated.

14. A catalyst layer obtained using a method according to any previous claim.

15. A catalyst-coated plate comprising the catalyst layer according to claim 24.
